# EUROPÄISCHE PATENTSCHRIFT

(11) **EP 2 879 099 B1**
(45) Veröffentlichungstag und Bekanntmachung des Hinweises auf die Patenterteilung: **09.01.2019**
(21) Anmeldenummer: 14192620.4
(22) Anmeldetag: 11.11.2014
(51) Int. Cl.: G07B 17/00

(54) **Verfahren zum Überprüfen einer Authentizität eines Absenders einer Sendung**
Method for verifying the authenticity of a sender of a message
Procédé de contrôle de l'authenticité d'un expéditeur d'un envoi

(30) Priorität: 02.12.2013 DE 102013113323
(43) Veröffentlichungstag der Anmeldung: 03.06.2015
(73) Patentinhaber: Deutsche Post AG, 53113 Bonn (DE)
(72) Erfinder: Rakow, Matthias, 12205 Berlin (DE); Fischer, Bastian, 53113 Bonn (DE)
(74) Vertreter: Michalski Hüttermann & Partner Patentanwälte mbB

(56) Entgegenhaltungen:
- US-A1- 2004 112 950
- US-A1- 2006 122 949
- US-A1- 2011 099 125

## Beschreibung

Die Erfindung betrifft ein Verfahren zum Überprüfen einer Authentizität eines Absenders einer Sendung mit dem Schritt Aufbringen eines maschinenlesbaren Frankiervermerks mit einem eingebetteten elektronischen Siegel auf die Sendung durch den Absender.

Zum Freimachen von Sendungen, wie Briefen und Paketen, sind aus dem Stand der Technik verschiedene Verfahren und Ausgestaltungen von Freimachungen bekannt. Dabei besteht jedoch seit jeher das Problem, die Freimachungen fälschungssicher auszugestalten, da, analog zu Phishing-Mails im Internet, Briefsendungen zunehmend genutzt werden, um einem Empfänger der Briefsendung eine falsche Identität vorzugaukeln. So werden Sendungen mit falscher Absenderidentität beispielsweise genutzt, um dem Absender unberechtigte wirtschaftliche Vorteile zu verschaffen, so einen Empfänger der Sendung zu einer Überweisung eines Betrages auf ein falsches Konto eines falschen Absenders zu bewegen, oder den Empfänger der Sendung zur Preisgabe von Zugangsdaten zu bewegen, die der falsche Absender dann zum Nachteil des Empfängers nutzt.

Aus der US 2004/0112950 ist ein sicheres Frankierungssystem bekannt. Das sichere Frankierungssystem sieht vor, das ein Käufer einer Briefmarke Identifizierungsinformationen, wie den Namen, die Adresse, die Telefonnummer, die Bankverbindung oder biometrische Informationen zum Zeitpunkt des Briefmarkenerwerbs bereitstellt. Die Identifizierungsinformationen werden codiert bzw. verschlüsselt und auf die Briefmarke aufgedruckt, während entsprechende Informationen in einem Speicher gespeichert und zu einem Individuum verknüpft werden. Alternativ dazu kann vorgesehen sein, dass auf der Briefmarke eine Seriennummer aufgedruckt ist, die dem Erwerber der Briefmarke zugeordnet werden kann.

Ausgehend von dieser Situation ist es eine Aufgabe der Erfindung, ein Verfahren zum Überprüfen einer Authentizität eines Absenders einer Sendung anzugeben, so dass ein Empfänger der Sendung in einfacher Weise die Authentizität des Absenders prüfen kann, um dadurch zu erkennen, ob die Sendung aus einer sicheren Quelle stammt und insofern die Sendung, und damit auch ein Inhalt der Sendung, vertrauenswürdig ist, so insbesondere die Sendung während des Transports unversehrt geblieben ist.

Die Lösung der Aufgabe erfolgt erfindungsgemäß durch die Merkmale des unabhängigen Anspruchs. Vorteilhafte Ausgestaltungen der Erfindung sind in den Unteransprüchen angegeben.

Offenbart wird ebenfalls ein Verfahren zum Überprüfen einer Authentizität eines Absenders einer Sendung, mit den Schritten:
a) Erzeugen eines als Matrixcode, als Barcode, als Serial Shipping Container Code, als EAN-UPC Code, als ITF-14 Code und/oder als DataMatrix Code ausgestalteten maschinenlesbaren Frankiervermerks mittels eines computer-implementierten Verfahrens durch den Absender, wobei
   in den Frankiervermerk ein elektronisches Siegel als elektronisches Geheimnis und eine der jeweiligen Sendung zugeordnete eindeutige Sendungsinformation eingebettet ist, und
   das elektronische Siegel als mit einem symmetrischen Schlüssel verschlüsseltes elektronisches Geheimnis, als Einmalkennwort als elektronisches Geheimnis und/oder als ein mittels eines HMAC-basierenden Einmalkennwort-Algorithmus gemäß RFC 4226 erzeugtes Einmalkennwort als elektronisches Geheimnis ausgestaltet ist,
b) Aufbringen und/oder Aufdrucken des maschinenlesbaren Frankiervermerks mit dem eingebetteten elektronischen Siegel auf die Sendung durch den Absender,
c) Elektronisches Übermitteln des elektronischen Siegels von dem Absender an einen Logistikdienstleister mittels einer Internetverbindung,
d) Einliefern der Sendung bei dem Logistikdienstleister durch den Absender,
e) Auslesen eines eingelieferten Siegels aus einem eingelieferten Frankiervermerk der bei dem Logistikdienstleister eingelieferten Sendung durch den Logistikdienstleister mittels einer als Smartphone, als Tablet-PC, als Laptop, als Kamera und/oder als Applikation ausgestalteten ersten Leseeinrichtung,
f) Vergleichen des eingelieferten Siegels mit dem übermittelten Siegel durch den Logistikdienstleister mittels eines computer-implementierten Verfahrens,
g) bei Übereinstimmung des Vergleiches nach Schritt f), Ausliefern der Sendung durch den Logistikdienstleister an den Empfänger,
h) Erfassen des ausgelieferten Frankiervermerks der an den Empfänger ausgelieferten Sendung mittels einer als Smartphone, als Tablet-PC, als Laptop, als Kamera und/oder als Applikation ausgestalteten mobilen Leseeinrichtung durch den Empfänger,
i) Übertragen eines von dem Empfänger der Sendung mittels der mobilen Leseeinrichtung erfassten ausgelieferten Frankiervermerks von dem Empfänger an den Logistikdienstleister mittels einer Internetverbindung,
j) Auslesen eines ausgelieferten Siegels aus dem empfangenen, ausgelieferten Frankiervermerk durch den Logistikdienstleister mittels eines computer-implementierten Verfahrens, und
k) Vergleichen des ausgelieferten Siegels mit dem übermittelten Siegel durch den Logistikdienstleister mittels eines computer-implementierten Verfahrens, und
l) bei Übereinstimmung des Vergleichs nach Schritt k), elektronisches Übermitteln einer Bestätigung über die Authentizität der Sendung durch den Logistikdienstleister an den Empfänger mittels einer Internetverbindung.

Ferner wird ein Verfahren zum Überprüfen einer Authentizität eines Absenders einer Sendung offenbart, mit den Schritten:
a) Aufbringen eines maschinenlesbaren Frankiervermerks mit einem eingebetteten elektronischen Siegel auf die Sendung durch den Absender,
c) Elektronisches Übermitteln des Siegels von dem Absender an einen Logistikdienstleister,
e) Auslesen eines eingelieferten Siegels aus einem eingelieferten Frankiervermerk der bei dem Logistikdienstleister eingelieferten Sendung durch den Logistikdienstleister,
i) Übertragen eines von einem Empfänger der Sendung mittels einer mobilen Leseeinrichtung erfassten ausgelieferten Frankiervermerks der an den Empfänger ausgelieferten Sendung von dem Empfänger an den Logistikdienstleister,
j) Auslesen eines ausgelieferten Siegels aus dem ausgelieferten Frankiervermerk durch den Logistikdienstleister, und
k) Vergleichen des ausgelieferten Siegels mit dem übermittelten Siegel durch den Lo gistikdienstleister.

Nach einer bevorzugten Weiterbildung umfasst das Verfahren zudem wenigstens einen der folgenden Schritte:
a) Erzeugen des Frankiervermerks aufweisend das eingebettete Siegel durch den Absender,
d) Einliefern der Sendung bei dem Logistikdienstleister,
f) Vergleichen des eingelieferten Siegels mit dem übermittelten Siegel durch den Lo gistikdienstleister,
g) bei Übereinstimmung des Vergleiches nach Schritt f), Ausliefern der Sendung an den Empfänger,
h) Erfassen des ausgelieferten Frankiervermerks der an den Empfänger ausgelieferten Sendung mittels der mobilen Leseeinrichtung durch den Empfänger, und/oder
1) bei Übereinstimmung des Vergleichs nach Schritt k), elektronisches Übermitteln einer Bestätigung über die Authentizität der Sendung durch den Logistikdienstleister an den Empfänger.

Wesentlicher Punkt der Erfindung ist somit, dass eine physische Sendung mit Hilfe eines von außen zugänglichen Frankiervermerks während des gesamten Produktionsprozesses, also beginnend mit dem Erzeugen des Frankiervermerks durch den Absender bis hin zur Auslieferung der Sendung an den Empfänger, so abgesichert ist, dass der Empfänger mit Hilfe einer mobilen Leseeinrichtung, so einem Smartphone, die Authentizität des Absenders prüfen kann. Da dem Logistikdienstleister der Absender bekannt ist, so dadurch, dass in Schritt e) das eingelieferte Siegel durch den Logistikdienstleister ausgelesen und in der Folge durch Vergleich geprüft wird, kann der Empfänger darauf vertrauen, dass die durch Schritt 1) übermittelte Bestätigung die Authentizität der Sendung richtig wiedergibt, somit also auch die Identität des Absenders bestätigt ist.

Mit anderen Worten kann der Logistikdienstleister durch das erfindungsgemäße Verfahren garantieren, dass die Sendung, und damit auch ein Inhalt der Sendung, unversehrt von genau dem "richtigen" Absender zum Empfänger gelangt ist, ohne dass während des Produktionsprozesses irgendeine Art zusätzlicher Signatur innerhalb der Sendung aufgebracht werden muss. Im Ergebnis wird damit für den Empfänger sowohl Herkunft als auch Unversehrtheit des Inhalts der Sendung durch den Logistikdienstleister garantiert, ohne dass der Logistikdienstleister selbst den Inhalt der Sendung kennen muss.

Ein wesentlich neuer Aspekt liegt in der Beteiligung des vertrauenswürdigen Dritten, so des Logistikdienstleisters. Bekannt sind bilaterale Authentizitätsprüfungen, bei denen aber Absender und Empfänger jeweils eine eigene Infrastruktur aufbauen müssen. Neu und Bestandteil der Erfindung ist jedoch eine Authentifizierung durch Einfügen des Logistikdienstleisters bzw. eines Postdienstleisters als vertrauenswürdige Instanz gegenüber dem Empfänger. Für den Empfänger fällt dadurch auch bei der Authentifikation verschiedener Sendungen verschiedener Absender kein zusätzlicher technischer Aufwand in seiner Infrastruktur an, egal wie viele Absender an dem Verfahren teilnehmen.

In Schritt a) wird der Frankiervermerk vorzugsweise als Matrixcode erzeugt und weist das elektronische Siegel, auch E-Siegel genannt, auf. Die Erzeugung des Frankiervermerks, ebenso Freimachung oder Briefmarke genannt, erfolgt vorzugsweise durch ein computerimplementiertes Verfahren, so durch eine Software und einen entsprechenden Drucker zum Aufbringen des Frankiervermerkes auf die Sendung. Die Sendung selbst kann ein Brief, eine Postsendung, ein Paket oder ein sonstiges transportables Gut sein, so beispielsweise eine Euro-Palette etc. Der Begriff "maschinenlesbar" bedeutet vorzugsweise, dass der Frankiervermerk automatisiert durch ein Computermittel lesbar und insofern auch weiter verarbeitbar ist. Weiter bevorzugt ist das elektronische Siegel als elektronisches Geheimnis ausgestaltet, wobei ferner bevorzugt das Geheimnis nur dem Absender und dem Logistikdienstleister bekannt ist und/oder nur für jeweils eine bestimmte Sendung gültig ist.

Sofern nun der derart ausgestaltete Frankiervermerk mit dem eingebetteten elektronischen Siegel, welches bevorzugt ebenso maschinenlesbar ausgestaltet ist, auf die Sendung aufgebracht ist, so durch einen Druckvorgang in Schritt a), erfolgt in Schritt c) das elektronische Übermitteln des Siegels von dem Absender an den Logistikdienstleister. Das elektronische Übermitteln erfolgt bevorzugt über ein Datennetzwerk, eine Mobilfunkverbindung, oder ein sonstiges Verfahren zum Austausch elektronischer Informationen, so beispielsweise als Email. Weiter bevorzugt speichert der Logistikdienstleister das übermittelte Siegel ab, so beispielsweise in einer Datenbank.

Danach, oder parallel dazu oder vorher, erfolgt gemäß Schritt d) das Einliefern der Sendung bei dem Logistikdienstleister, was einerseits durch den Absender durch Überbringen der Sendung an den Logistikdienstleister geschehen kann. Ebenso ist es möglich, dass der Logistikdienstleister die Sendung bei dem Absender abholt und/oder ein technisches Mittel zum Einliefern der Sendung beim Logistikdienstleister verwendet wird, so ein Förderband oder eine Packstation. Dadurch, dass der Absender die Sendung selbst dem Logistikdienstleister überbringt, oder aber der Logistikdienstleister die Sendung bei dem Absender abholt, ist gewährleistet, dass die Sendung nicht mehr von Unbefugten gesehen oder verändert werden kann.

Bevor nun vorzugsweise der Logistikdienstleister die Sendung an den Empfänger gemäß Schritt g) ausliefert, liest der Logistikdienstleister in Schritt e) zunächst das eingelieferte Siegel aus dem eingelieferten Frankiervermerk der eingelieferten Sendung aus. Zum Auslesen verwendet der Logistikdienstleister vorzugsweise eine geeignete Leseeinrichtung, so eine Kamera oder eine Scannereinrichtung, welche bevorzugt über eine Auflösung von mindestens 5 Megapixeln verfügt.

In Schritt f) vergleicht der Logistikdienstleister dann das derart ausgelesene eingelieferte Siegel mit dem in Schritt c) übermittelten Siegel des Absenders. Stimmen die Siegel überein, also sofern kein Unterschied zwischen dem übermittelten Siegel und dem ausgelesenen eingelieferten Siegel besteht, dann stammt die Sendung zweifelsfrei vom Absender, stellt also ein "Original" dar. In diesem Fall stimmt also der eingelieferte Frankiervermerk mit dem in Schritt a) erzeugten und Schritt b) aufgebrachten Frankiervermerk überein, somit also auch das darin eingebettete elektronische Siegel. Sofern jedoch festgestellt wird, dass das aus dem eingelieferten Frankiervermerk extrahierte eingelieferte Siegel nicht mit dem in Schritt c) übermittelten Siegel übereinstimmt, kann der Logistikdienstleister eine Auslieferung der Sendung an den Empfänger unterbinden, so beispielsweise den Absender und/oder Empfänger über die Fälschung informieren, die Sendung vernichten oder die Sendung an die Absender zurückschicken.

Sofern jedoch keine Differenz bei dem Vergleich des ausgelesenen eingelieferten Siegels der eingelieferten Sendung mit dem vorab mittels Schritt c) übermittelten Siegel festgestellt werden, erfolgt in Schritt g) die Auslieferung der Sendung an den Empfänger, so vorzugsweise ebenso durch den Logistikdienstleister. Somit ist gewährleistet, dass während der Auslieferung der Sendung vom Logistikdienstleister zum Empfänger kein unbefugter Dritter die Sendung kopieren oder manipulieren kann.

Der Empfänger kann nunmehr in Schritt h) mittels der mobilen Leseeinrichtung, so beispielsweise mit einem Smartphone und einer entsprechenden Applikation, den ausgelieferten Frankiervermerk der ausgelieferten Sendung erfassen und dann in Schritt e) an den Logistikdienstleister übertragen. Vorzugsweise erfolgt die Übertragung mittels einer Internetverbindung, so beispielsweise durch eine drahtgebundene oder drahtlose Internetverbindung. Mit anderen Worten ist also bevorzugt, dass der Empfänger mittels der mobilen Leseeinrichtung nur den ausgelieferten Frankiervermerk erfasst, nicht jedoch aus dem ausgelieferten Frankiervermerk das ausgelieferte Siegel ausliest und/oder extrahiert. Denn nach dem Verfahren ist vorgesehen, dass in Schritt j) das Auslesen des ausgelieferten Siegels aus dem vom Empfänger erhaltenen ausgelieferten Frankiervermerk durch den Logistikdienstleister erfolgt.

In Schritt k) vergleicht schließlich der Logistikdienstleister das derart ausgelesene und im Ergebnis vom Empfänger erhaltene ausgelieferte Siegel mit dem in Schritt c) vom Absender übermittelten Siegel. Sofern das ausgelieferte Siegel mit dem übermittelten Siegel übereinstimmt, ist die Identität des Absenders gewährleistet. Mit anderen Worten ist also die Sendung unversehrt vom korrekten Absender zum korrekten Empfänger ausgeliefert worden. Eine entsprechende Bestätigung kann mittels Schritt l) elektronisch an den Empfänger übermittelt werden, so dass der Logistikdienstleister gegen den Empfänger die Authentizität der Sendung bestätigt. In diesem Fall stimmen das aufgebrachte Siegel, das eingelieferte Siegel sowie das ausgelieferte Siegel überein. Vorzugsweise stimmen auch der aufgebrachte Frankiervermerk, der eingelieferte Frankiervermerk sowie der ausgelieferte Frankiervermerk überein.

Im Ergebnis wird durch das erfindungsgemäße Verfahren gegenüber dem Empfänger gewährleistet, dass einerseits die Identität des Absenders richtig ist, und andererseits, dass die Sendung zwischen Absender und Empfänger unversehrt transportiert worden ist. Voraussetzung dazu ist selbstredend, dass der Absender, ebenso wie der Logistikdienstleister, das Siegel gegenüber dritten Personen geheim hält, und das Siegel auch über eine sichere Schnittstelle vom Absender an den Logistikdienstleister gelangt. Zudem wird selbstredend vorausgesetzt, dass die Sendung entlang des Transportweges vom Absender zum Empfänger für keinen unbefugten Dritten zugänglich ist. Dadurch, dass der Frankiervermerk maschinenlesbar ausgestaltet ist, lässt sich das Verfahren besonders einfach automatisieren, so dass das Siegel automatisiert durch eine Computereinrichtung bei dem Logistikdienstleister auslesbar und verarbeitbar ist und ebenso beim Empfänger durch die mobile Leseeinrichtung erfasst und automatisiert an den Logistikdienstleister weitergegeben werden kann. Somit lässt sich, da der Empfänger durch Einlesen des ausgelieferten Frankiervermerks in einfacher Weise die Authentizität der Sendung überprüfen kann, durch das in Rede stehende Verfahren ein Phishing der Sendung wirkungsvoll unterbinden.

Nach einer weiteren bevorzugten Ausgestaltung weist der Frankiervermerk zudem eine Sendungs- und/oder Frankierinformation und das Verfahren die folgenden Schritte auf:
e') Auslesen einer eingelieferten Sendungs- und/oder Frankierinformation aus dem eingelieferten Frankiervermerk der eingelieferten Sendung durch den Logistikdienstleister,
f) Vergleichen der eingelieferten Sendungs- und/oder Frankierinformation mit einer gespeicherten Sendungs- und/oder Frankierinformation durch den Logistikdienstleister, und
g') bei Übereinstimmung des Vergleiches nach Schritt f'), Ausliefern der Sendung an den Empfänger.

Durch diese Ausgestaltung ist es möglich, dass der Logistikdienstleister, vor Auslieferung der Sendung an den Empfänger, zusätzlich prüfen kann, ob die Sendungs- und/oder Frankierinformationen richtig sind, so beispielsweise prüfen kann, ob denn die Sendung ausreichend frankiert ist oder die Frankierung gefälscht ist. Sofern dies nicht der Fall ist, kann der Logistikdienstleister den Absender über die Differenz bzw. Fälschung informieren. Die gespeicherte Sendungs- und/oder Frankierinformation kann in einer Datenbank abgelegt sein, wobei es ebenso möglich ist, dass der Absender die Sendungs- und/oder Frankierinformation zusammen mit dem Siegel an den Logistikdienstleister in Schritt c) überträgt. Bei einer derartigen Ausgestaltung kann der Logistikdienstleister dann nicht nur einen Vergleich des ausgelesenen eingelieferten Siegels vornehmen, sondern ebenso die zuvor erhaltenen Sendungs- und/oder Frankierinformationen mit den ausgelesenen eingelieferten Sendungs- und/oder Frankierinformationen vergleichen.

Nach einer weiteren bevorzugten Ausgestaltung weist das Verfahren den Schritt g") bei Nicht-Übereinstimmung des Vergleichs nach Schritt f') und Übereinstimmung des Vergleichs nach Schritt f) Ermöglichen einer Korrektur der eingelieferten Sendungs- und/oder Frankierinformation auf. Sofern also der Logistikdienstleister feststellt, dass das Siegel nicht gefälscht ist, allerdings die Sendungs- und/oder Frankierinformation nicht richtig ist, so beispielsweise die Adresse des Empfängers fehlerhaft oder die Sendung unzureichend frankiert ist, so kann der Logistikdienstleister dem Absender ermöglichen, die entsprechende Diskrepanz zu korrigieren. Beispielsweise kann der Logistikdienstleister dem Absender eine Webseite zur Verfügung stellen, auf der der Absender die Empfängeradresse korrigieren oder eine Nachzahlung für die Frankierung tätigen kann. Weiter bevorzugt umfassen die Sendungsinformation eine Herausgebernummer, ein Frankierdatum, eine Produktnummer und/oder eine Sendungsnummer, sowie Informationen über den Empfänger der Sendung.

Nach einer noch weiteren bevorzugten Ausgestaltung weist das Verfahren den Schritt k') bei Übereinstimmung des Vergleiches nach Schritt j), elektronisches Übermitteln einer Absenderinformation der Sendung durch den Logistikdienstleister an den Empfänger auf. Nach dieser Ausgestaltung wird der Empfänger über eine Absenderinformation, so beispielsweise eine Adresse des Absenders, durch den Logistikdienstleister informiert. Bevorzugt erfolgt die elektronische Übermittlung von dem Logistikdienstleister auf die mobile Leseeinrichtung, so beispielsweise auf ein Smartphone des Empfängers. Dadurch kann dem Empfänger eine "richtige" Adresse des Absenders mitgeteilt werden.

Grundsätzlich kann der maschinenlesbare Frankiervermerk beliebig ausgestaltet sein. Nach einer besonders bevorzugten Ausgestaltung des erfindungsgemäßen Verfahrens ist der maschinenlesbare Frankiervermerk jedoch als Matrixcode, als Barcode, als Serial Shipping Container Code, als EAN-UPC Code, als ITF-14 Code und/oder als DataMatrix Code ausgestaltet. Vorzugsweise ist der Serial Shipping Container Code nach GS1-128 Standard ausgestaltet und der DataMatrix Code vorzugsweise nach ISO/IEC 16022:2000 ausgestaltet. Im Falle einer Ausgestaltung nach GS1 kann der Frankiervermerk als GS1 DataMatrix, auch DataMatrix Code mit GS1-Datenstruktur genannt, ausgestaltet sein. Durch eine derartige Weiterbildung lässt sich einerseits eine besonders gute Maschinenlesbarkeit des Frankiervermerks gewährleisten, andererseits jedoch unter Verwendung einer der vorgenannten Standardisierungen sicherstellen, dass der derart ausgestaltete Frankiervermerk durch bereits existierende Leseeinrichtungen von Logistikdienstleistern automatisch erfassbar ist.

Nach einer weiteren bevorzugten Ausgestaltung ist die mobile Leseeinrichtung als Smartphone, als Tablet-PC, als Laptop, als Kamera und/oder als Applikation ausgestaltet.

Bevorzugt weist die Leseeinrichtung eine Kamera zur Erfassung des Frankiervermerks auf, wobei weiter bevorzugt eine entsprechend ausgestaltete Applikation auf einem Smartphone den derart eingelesenen Frankiervermerk mittels einer auf dem Smartphone konfigurierten Internetverbindung drahtlos an den Logistikdienstleister überträgt. Da heutzutage bereits eine Vielzahl von Smartphones mit Kamera und Internetverbindung ausgestaltet sind, lässt sich das erfindungsgemäße Verfahren besonders einfach bei prinzipiell beliebig vielen Empfängern dadurch implementieren, dass der jeweilige Empfänger nur eine entsprechende Applikation auf seinem Smartphone, oder alternativ auf seinem Tablet-PC, aufspielen muss. Insofern lässt sich das Verfahren, seitens des Empfängers, mit wenig Aufwand implementieren.

Das elektronische Siegel kann ebenso beliebig ausgestaltet sein, wobei nach einer bevorzugten Ausgestaltung der Erfindung jedoch vorgesehen ist, dass das elektronische Siegel als symmetrischer Schlüssel, als Einmalkennwort und/oder als ein mittels eines HMAC-basierenden Einmalkennwort-Algorithmus gemäß RFC 4226 erzeugtes Einmalkennwort ausgestaltet ist. Die Ausgestaltung als Einmalkennwort, auch One Time-Passwort genannt, ist besonders vorteilig, da für eine bestimmte Sendung nicht jedes Siegel einzeln ausgetauscht werden muss, sondern nach einer weiteren bevorzugten Ausgestaltung mittels des Schrittes m) das Siegel zwischen dem Absender und dem Logistikdienstleister mittels eines Diffie-Hellman-Keppler Verfahrens austauschbar ist, somit also für eine ganze Gruppe von Sendungen, so beispielsweise einem bestimmten Einlieferauftrag eines Absenders, austauschbar ist.

In jedem Fall, also gleich ob ein symmetrisches Geheimnis oder ein Einmalkennwort gewählt wird, sollte die Erzeugung des Geheimnisses, so des Siegels, genügend zufällig sein, so dass das Geheimnis aus sonstigen Umgebungsdaten nicht vorhergesehen werden kann, so insbesondere nicht aus sonstigen im Frankiervermerk enthaltenen Informationen. Bei genanntem RFC 4226, Requests for Comments, handelt es sich um eine feststehende Definition mit dem Titel "An HMAC-based one-time password algorithm", dessen Code auf einer kryptographischen Hash-Funktion basiert. Die Abkürzung HMAC steht für "Hash-based Message Authentification Code". Der Fachmann wird die genaue Definition dieses Algorithmus der im Dezember 2005 von der Internet Engineering Task Force verabschiedeten RFC 4226 entnehmen.

Erfindungsgemäß weist das Verfahren den Schritt n) bei Übereinstimmung des Vergleiches nach Schritt k), elektronisches Übermitteln einer Bestätigung über die Auslieferung der Sendung durch den Logistikdienstleister an den Absender auf. Durch eine derartige Bestätigung kann auch der Absender informiert werden, dass seine Sendung sicher und unversehrt beim "richtigen" Empfänger angekommen ist.

Nachfolgend wird die Erfindung unter Bezugnahme auf die anliegende Zeichnung anhand bevorzugter Ausführungsformen näher erläutert.

Es zeigen
- Fig. 1: ein Verfahren zum Überprüfen einer Authentizität eines Absenders einer Sendung gemäß einem bevorzugten Ausführungsbeispiel der Erfindung als Ablaufdiagramm,
- Fig. 2: das Verfahren gemäß Fig. 1 mit weiteren, jeweils optionalen Schritten, ebenso als Ablaufdiagramm, und
- Fig. 3: eine schematische Darstellung des Absenders, eines Logistikdienstleisters, eines Empfängers sowie der Sendung gemäß dem bevorzugten Ausführungsbeispiel.

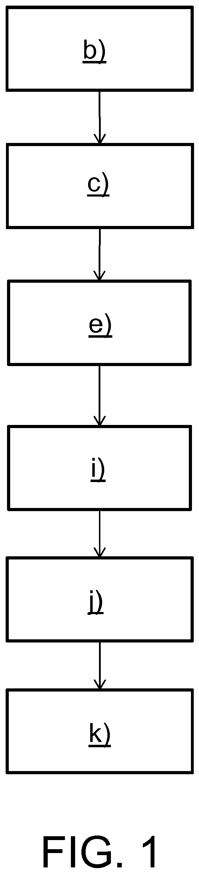

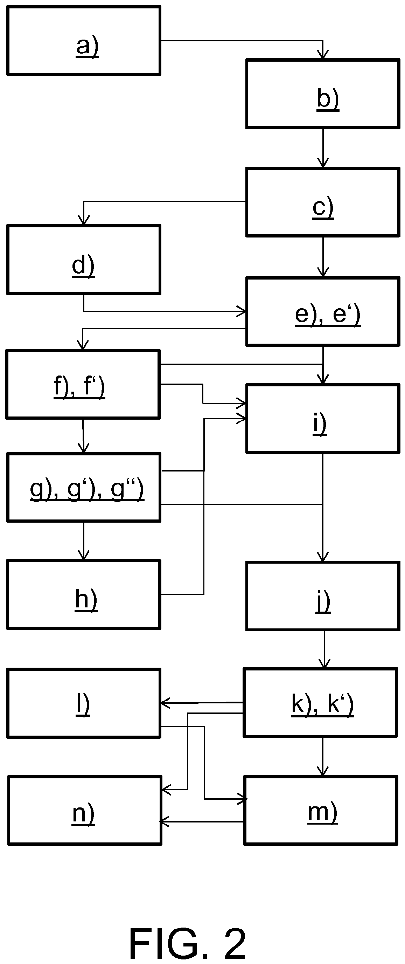

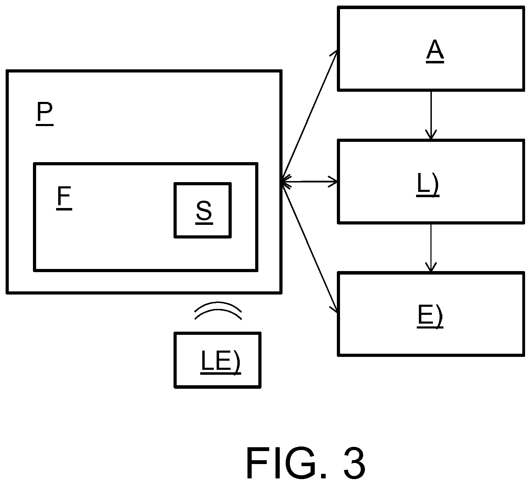

Fig. 1 zeigt als Ablaufdiagramm ein erfindungsgemäßes Verfahren zum Überprüfen einer Authentizität eines Absenders A einer Sendung P, wobei Fig. 2 das in Fig. 1 gezeigte Verfahren mit weiteren, optionalen Schritten zeigt. Fig. 3 zeigt, in schematischer Ansicht, die Sendung P, sowie den am Verfahren beteiligten Absender A, einen am Verfahren beteiligten Logistikdienstleister L, sowie schließlich einen am Verfahren beteiligten Empfänger E.

Im Schritt b) erfolgt zunächst das Aufbringen eines maschinenlesbaren Frankiervermerks F mit einem eingebetteten elektronischen Siegel S auf die Sendung P durch den Absender A. Der Frankiervermerk F ist als Matrixcode ausgestaltet, wobei das elektronische Siegel S ein Einmalkennwort ist, welches mittels eines HMAC-basierenden Einmalkennwort-Algorithmus gemäß RFC 4226 erzeugt worden ist. Die Sendung P stellt einen Brief dar, wobei auch ein Paket oder ein sonstiges transportables Gut möglich wäre. Maschinenlesbar bedeutet, dass der derart ausgestaltete Frankiervermerk F durch eine elektronische Erfassungseinrichtung des Logistikdienstleisters L, so beispielsweise durch eine Kamera, automatisiert einlesbar ist.

Im nun folgenden Schritt c) übermittelt der Absender A das Siegel S elektronisch an den Logistikdienstleister L, vorliegend mittels einer Internetverbindung. In der Folge liest der Logistikdienstleister L in Schritt e) von der zwischenzeitlich bei dem Logistikdienstleister L eingelieferten Sendung P ein eingeliefertes Siegel S aus einem eingelieferten Frankiervermerk F aus. Sofern es sich bei dem eingelieferten Frankiervermerk F um den in Schritt b) auf die Sendung P aufgebrachten Frankiervermerk F handelt, entspricht selbstredend der eingelieferte Frankiervermerk F dem aufgebrachten Frankiervermerk F und ebenso das eingelieferte Siegel S dem elektronisch in Schritt c) übermittelten Siegel S.

Nachdem nun der Logistikdienstleister L die Sendung P an den Empfänger E überbracht hat, überträgt der Empfänger E in Schritt i) ein mittels einer mobilen Leseeinrichtung LE von der Sendung P erfassten ausgelieferten Frankiervermerk F an den Logistikdienstleister L. Der Logistikdienstleister L liest dann in Schritt j) aus dem derart erhaltenen ausgelieferten Frankiervermerk F ein ausgeliefertes Siegel S aus und vergleicht dieses in Schritt k) mit dem in Schritt c) übermittelten Siegel S. Sofern das ausgelieferte Siegel S dem übermittelten Siegel S entspricht, ist die Authentizität des Absenders A der Sendung P sichergestellt. Mit anderen Worten bedeutet dies, dass die Sendung P unversehrt vom Absender A zum Empfänger E gelangt ist.

Fig. 2 zeigt weitere, optionale Schritte des erfindungsgemäßen Verfahrens. Gemäß Schritt a) erfolgt zunächst das Erzeugen des Frankiervermerks F aufweisend das eingebettete Siegel S durch den Absender A, so durch eine Computereinrichtung, so dass in den Schritt b) der Matrixcode auf die Sendung aufdruckbar ist. Nach Schritt d) erfolgt das Einliefern der Sendung P bei dem Logistikdienstleister L, was einerseits durch den Absender A selbst geschehen kann oder aber durch den Logistikdienstleister L, sofern dieser die Sendung P beim Absender A abholt.

Um nun feststellen zu können, ob das ausgelesene eingelieferte Siegel S der bei dem Logistikdienstleister L eingelieferten Sendung P mit dem zuvor in Schritt c) elektronisch übermittelten Siegel S übereinstimmt, erfolgt in Schritt f) ein Vergleichen des eingelieferten Siegels S mit dem übermittelten Siegel S durch den Logistikdienstleister L. Dadurch kann der Logistikdienstleister L zunächst feststellen, ob die Sendung P ein "Original" des Absenders A darstellt. Sofern dies der Fall ist, erfolgt nach Schritt g) das Ausliefern der Sendung P an den Empfänger E durch den Logistikdienstleister L.

Neben dem Siegel S kann der Frankiervermerk F zudem eine Sendungs- und/oder Frankierinformation aufweisen, so beispielsweise eine Adresse des Empfängers E und eine Frankierung. Entsprechend sind die Schritte e'), f) sowie g') vorgesehen, mittels derer zunächst aus dem eingelieferten Frankiervermerk F eine eingelieferte Sendungs- und/oder Frankierinformation ausgelesen wird, die dann im Schritt f) mit einer gespeicherten Sendungs- und/oder Frankierinformation verglichen wird. Damit lässt sich feststellen, ob denn die Sendung P über eine ausreichende Frankierung verfügt, oder die Adresse des Empfängers E richtig ist.

Sofern ein Vergleich eine Übereinstimmung zeigt, erfolgt nach Schritt g') das Ausliefern der Sendung P an den Empfänger E. Dabei ist jedoch der Fall denkbar, dass einerseits die Prüfung des Siegels S die Korrektheit des Siegels S bestätigt, andererseits jedoch der Vergleich der eingelieferten Sendungs- und/oder Frankierinformation mit der zuvor gespeicherten Sendungs- und/oder Frankierinformation eine Abweichung zeigt, wenn beispielsweise der Absender A die Adresse des Empfängers E falsch angegeben hat oder die Frankierung nicht ausreichend ist. In diesem Fall ist gemäß Schritt g") möglich, die eingelieferte Sendungs- und/oder Frankierinformation zu korrigieren. Der Logistikdienstleister L stellt dazu dem Absender A eine Webseite zur Verfügung, auf der der Absender A eine mögliche unzureichende Frankierung korrigieren kann.

Im Schritt h) erfolgt das Erfassen des ausgelieferten Frankiervermerks F der ausgelieferten Sendung P mittels der mobilen Leseeinrichtung LE durch den Empfänger E. Die Leseeinrichtung LE ist als Smartphone ausgestaltet, auf der eine entsprechende Applikation installiert ist. Durch die Kamera des Smartphones wird der Frankiervermerk F erfasst und mittels des Smartphones über eine Internetverbindung an einen Server des Logistikdienstleisters L übertragen. Mit anderen Worten erfasst der Empfänger E mittels seines Smartphones zwar den ausgelieferten Frankiervermerk F der ausgelieferten Sendung P, allerdings findet seitens des Empfängers E keine Auswertung des derart ausgelesenen Frankiervermerks F statt. Stattdessen liest der Logistikdienstleister L in Schritt j) aus dem vom Empfänger E erhaltenen ausgelieferten Frankiervermerk F das ausgelieferte Siegel S aus und vergleicht dieses in Schritt k) mit dem zuvor in Schritt c) erhaltenen Siegel S.

Sofern nun bei dem Vergleich eine Übereinstimmung festgestellt wird, erfolgt nach Schritt l) ein elektronisches Übermitteln einer entsprechenden Bestätigung über die Authentizität der Sendung P durch den Logistikdienstleister L an den Empfänger E. Somit kann der Empfänger E sichergehen, dass die Sendung P nicht ohne Zutun des Logistikdienstleisters L ausgeliefert wurde, so im Ergebnis sowohl Herkunft als auch Unversehrtheit des Inhalts der Sendung P bestätigt ist.

Das elektronische Siegel S, ausgestaltet als Einmalkennwort, ist nur dem Absender A und dem Logistikdienstleister L bekannt, wobei ein Austausch des Siegels S in Schritt m) mittels eines Diffie-Hellman-Keppler Verfahrens erfolgt. Dies hat den Vorteil, dass für eine bestimmte Sendung P nicht jedes Siegel S einzeln ausgetauscht werden muss, sondern ein Austausch für eine ganze Gruppe von Sendungen P erfolgen kann.

Nach Schritt n) ist schließlich noch möglich, dass bei Übereinstimmung des Vergleiches des ausgelieferten Siegels S mit dem nach Schritt c) übermittelten Siegel S eine Bestätigung über die Auslieferung der Sendung P durch den Logistikdienstleister L an den Absender A erfolgt. Dann weiß auch der Absender A, dass die Sendung P erfolgreich dem Empfänger E zugestellt worden ist.

Durch das erfindungsgemäße Verfahren erhält der Empfänger E von dem Logistikdienstleister L eine Bestätigung über die Authentizität des Absenders A der Sendung P, ohne dass dazu dem Empfänger E die Identität des Absenders A bekannt sein muss. Der Logistikdienstleister L kann durch das beschriebene Verfahren garantieren, dass die Sendung P, und damit auch der Inhalt der Sendung P, unversehrt von dem "richtigen" Absender A zum "richtigen" Empfänger E gelangt ist, ohne dass dazu der Logistikdienstleister L einen Inhalt der Sendung P kennen muss. Schließlich kann der Logistikdienstleister L dem Absender A die Identität des Empfängers E bestätigen, ohne dass dazu der Absender A aufwändige eigene Systeme vorhalten muss.

**Bezugszeichenliste**

| | |
|---|---|
| Absender | A |
| Logistikdienstleister | L |
| Empfänger | E |
| Sendung | P |
| Frankiervermerk | F |
| Siegel | S |
| Leseeinrichtung | LE |

## Patentansprüche

1. Verfahren zum Überprüfen einer Authentizität eines Absenders (A) einer Sendung (P), mit den Schritten:
a) Erzeugen eines als Matrixcode, als Barcode, als Serial Shipping Container Code, als EAN-UPC Code, als ITF-14 Code und/oder als DataMatrix Code ausgestalteten maschinenlesbaren Frankiervermerks (F) mittels eines computer-implementierten Verfahrens durch den Absender (A), wobei
in den Frankiervermerk (F) ein elektronisches Siegel (S) als elektronisches Geheimnis und eine der jeweiligen Sendung zugeordnete eindeutige Sendungsinformation eingebettet ist, und
das elektronische Siegel (S) als mit einem symmetrischen Schlüssel verschlüsseltes elektronisches Geheimnis, als Einmalkennwort als elektronisches Geheimnis und/oder als ein mittels eines HMAC-basierenden Einmalkennwort-Algorithmus gemäß RFC 4226 erzeugtes Einmalkennwort als elektronisches Geheimnis ausgestaltet ist,
b) Aufbringen und/oder Aufdrucken des maschinenlesbaren Frankiervermerks (F) mit dem eingebetteten elektronischen Siegel (S) auf die Sendung (P) durch den Absender (A),
c) Elektronisches Übermitteln des elektronischen Siegels (S) von dem Absender (A) an einen Logistikdienstleister (L) mittels einer Internetverbindung,
d) Einliefern der Sendung (P) bei dem Logistikdienstleister (L) durch den Absender (A),
e) Auslesen eines eingelieferten Siegels (S) aus einem eingelieferten Frankiervermerk (F) der bei dem Logistikdienstleister (L) eingelieferten Sendung (P) durch den Logistikdienstleister (L) mittels einer als Smartphone, als Tablet-PC, als Laptop, als Kamera und/oder als Applikation ausgestalteten ersten Leseeinrichtung (LE),
f) Vergleichen des eingelieferten Siegels (S) mit dem übermittelten Siegel (S) durch den Logistikdienstleister (L) mittels eines computer-implementierten Verfahrens,
g) bei Übereinstimmung des Vergleiches nach Schritt f), Ausliefern der Sendung (P) durch den Logistikdienstleister (L) an den Empfänger (E),
h) Erfassen des ausgelieferten Frankiervermerks (F) der an den Empfänger (E) ausgelieferten Sendung (P) mittels einer als Smartphone, als Tablet-PC, als Laptop, als Kamera und/oder als Applikation ausgestalteten mobilen Leseeinrichtung (LE) durch den Empfänger (E),
i) Übertragen eines von dem Empfänger (E) der Sendung (P) mittels der mobilen Leseeinrichtung (LE) erfassten ausgelieferten Frankiervermerks (F) von dem Empfänger (E) an den Logistikdienstleister (L) mittels einer Internetverbindung,
j) Auslesen eines ausgelieferten Siegels (S) aus dem empfangenen, ausgelieferten Frankiervermerk (F) durch den Logistikdienstleister (L) mittels eines computer-implementierten Verfahrens, und
k) Vergleichen des ausgelieferten Siegels (S) mit dem übermittelten Siegel (S) durch den Logistikdienstleister (L) mittels eines computer-implementierten Verfahrens,
l) bei Übereinstimmung des Vergleichs nach Schritt k), elektronisches Übermitteln einer Bestätigung über die Authentizität der Sendung (P) durch den Logistikdienstleister (L) an den Empfänger (E) mittels einer Internetverbindung, und
n) bei Übereinstimmung des Vergleiches nach Schritt k), elektronisches Übermitteln einer Bestätigung über die Auslieferung der Sendung (P) durch den Logistikdienstleister (L) an den Absender (A) mittels einer Internetverbindung.

2. Verfahren nach dem vorhergehenden Anspruch, wobei der Frankiervermerk (F) zudem eine Frankierinformation aufweist, und mit den Schritten:
e') Auslesen einer eingelieferten Sendungs- und/oder Frankierinformation aus dem eingelieferten Frankiervermerk (F) der eingelieferten Sendung (P) durch den Logistikdienstleister (L),
f') Vergleichen der eingelieferten Sendungs- und/oder Frankierinformation mit einer gespeicherten Sendungs- und/oder Frankierinformation durch den Logistikdienstleister (L), und
g') bei Übereinstimmung des Vergleiches nach Schritt f'), Ausliefern der Sendung (P) an den Empfänger (E).

3. Verfahren nach dem vorhergehenden Anspruch, mit dem Schritt:
g") bei Nicht-Übereinstimmung des Vergleichs nach Schritt f') und Übereinstimmung des Vergleichs nach Schritt f), Ermöglichen einer Korrektur der eingelieferten Sendungs- und/oder Frankierinformation.

4. Verfahren nach einem der vorhergehenden Ansprüche, mit dem Schritt:
k') bei Übereinstimmung des Vergleiches nach Schritt j), elektronisches Übermitteln einer Absenderinformation der Sendung (P) durch den Logistikdienstleister (L) an den Empfänger (E) mittels einer Internetverbindung.

## Claims

1. A method for checking an authentication of a sender (A) of a mail item (P), comprising the steps of:
a) the sender (A) generating a machine-readable postage indicium (F) by means of a computer-implemented method, the postage indicium being configured as a matrix code, a bar code, a serial shipping container code, a EAN-UPC Code, a ITF-14 code and/or a data matrix code, wherein
an electronic seal (S), as an electronic secret, and a piece of unambiguous mail item information assigned to the particular mail item are embedded in the postage indicium (F), and
the electronic seal (S) is designed as an electronic secret encoded with a symmetric key, as a one-time password as electronic secret, and/or as a one-time password as an electronic secret, which is generated by means of an HMAC-based one-time password algorithm according to RFC 4226,
b) the sender (A) applying and/or printing the machine-readable postage indicium (F) having the embedded electronic seal (S) onto the mail item (P),
c) the sender (A) electronically transmitting the electronic seal (S) to a logistics service provider (L) by means of an Internet connection,
d) the sender (A) delivering the mail item (P) to the logistics service provider (L),
e) the logistics service provider (L) reading a received seal (S) out of a received postage indicium (F) of the mail item (P) that was received by the logistics service provider (L), by means of a first reading device (LE), which is provided as a smartphone, a tablet PC, a laptop, a camera and/or as an application,
f) the logistics service provider (L) comparing the received seal (S) with the transmitted seal (S), by means of a computer-implemented method,
g) the logistics service provider (L) delivering the mail item (P) to the recipient (E), provided the comparison carried out according to step f) shows a match,
h) the recipient (E) detecting the delivered postage indicium (F) of the mail item (P) delivered to the recipient (E), by means of a mobile reading device (LE), which is provided as a smartphone, a tablet PC, a laptop, a camera and/or an application,
i) the recipient (E) transferring a delivered postage indicium (F), which was detected by the recipient (E) of the mail item (P) by means of the mobile reading device (LE), to the logistics service provider (L) by means of an Internet connection,
j) the logistics service provider (L) reading a delivered seal (S) out of the received, delivered postage indicium (F) by means of a computer-implemented method, and
k) the logistics service provider (L) comparing the received seal (S) with the transmitted seal (S), by means of a computer-implemented method,
l) the logistics service provider (L) electronically transmitting a confirmation of the authenticity of the mail item (P) to the recipient (E) by means of an Internet connection, provided the comparison carried out according to step k) shows a match, and
n) the logistics service provider (L) electronically transmitting a confirmation of the delivery of the mail item (P) to the sender (A) by means of an Internet connection, provided the comparison carried out according to step k) shows a match.

2. The method according to the preceding claims, wherein the postage indicium (F) additionally comprises a piece of franking information, and having the steps of:
e') the logistics service provider (L) reading a received piece of mail item information and/or franking information out of the received postage indicium (F) of the received mail item (P),
f) the logistics service provider (L) comparing the received piece of mail item information and/or franking information with a stored piece of mail item information and/or franking information, and
g') delivering the mail item (P) to the recipient (E), provided the comparison carried out according to step f) shows a match.

3. The method according to the preceding claim, comprising the step of:
g") permitting the received bit of mail item information and/or franking information to be corrected in the event that the comparison carried out according to step f) does not show a match and the comparison carried out according to step f) shows a match.

4. The method according to any one of the preceding claims, comprising the step of:
k') the logistics service provider (L) electronically transmitting a piece of sender information on the mail item (P) to the recipient (E) by means of an Internet connection, provided the comparison carried out according to step j) shows a match.

## Revendications

1. Procédé de vérification de l'authenticité d'un expéditeur (A) d'un envoi (P), comprenant les étapes suivantes :
a) génération par l'expéditeur (A) d'une marque d'affranchissement lisible par machine (F) se présentant sous la forme d'un code matriciel, d'un code à barres, d'un code de conteneur d'expédition en série, d'un code EAN-UPC, d'un code ITF-14 et/ou d'un code DataMatrix au moyen d'un processus mis en oeuvre par ordinateur, dans lequel un sceau électronique (S), en tant que secret électronique et une information unique concernant l'envoi respectif, sont intégrés dans la marque d'affranchissement (F), et
le sceau électronique (S) se présente sous la forme d'un secret électronique crypté par une clé symétrique, d'un mot de passe à usage unique en tant que secret électronique et/ou d'un mot de passe à usage unique généré au moyen d'un algorithme de type HMAC pour mot de passe à usage unique selon la norme RFC 4226 en tant que secret électronique,
b) apposition et/ou impression par l'expéditeur (A), sur l'envoi (P), de la marque d'affranchissement lisible par machine (F) avec le cachet électronique intégré (S),
c) transmission électronique du sceau électronique (S) de l'expéditeur (A) à un prestataire de services logistiques (L) au moyen d'une liaison Internet,
d) livraison par l'expéditeur (A) de l'envoi (P) au prestataire de services logistiques (L),
e) lecture par le prestataire de services logistiques (L) d'un sceau (S) livré à partir d'une marque d'affranchissement (F) livrée de l'envoi (P) livré au prestataire de services logistiques (L) au moyen d'un premier dispositif de lecture (LE) se présentant sous la forme d'un téléphone intelligent, d'une tablette PC, d'un ordinateur portable, d'une caméra et/ou d'une application,
f) comparaison par le prestataire de services logistiques (L) du sceau (S) livré au sceau (S) transmis au moyen d'un processus mis en oeuvre par ordinateur,
g) si la comparaison effectuée à l'étape f) est positive, livraison par le prestataire de services logistiques (L) de l'envoi (P) au destinataire (E),
h) détection par le destinataire (E) de la marque d'affranchissement (F) de l'envoi (P) livré au destinataire (E) au moyen d'un dispositif de lecture mobile (LE) se présentant sous la forme d'un téléphone intelligent, d'un ordinateur portable, d'une tablette PC, d'une caméra et/ou d'une application,
i) transmission d'une marque d'affranchissement (F) livrée détectée par le destinataire (E) de l'envoi (P) au moyen du dispositif de lecture mobile (LE) du destinataire (E) au prestataire de services logistiques (L) au moyen d'une liaison Internet,
j) lecture par le prestataire de services logistiques (L) d'un sceau (S) livré à partir de la marque d'affranchissement (F) reçue et livrée au moyen d'un processus mis en oeuvre par ordinateur, et
k) comparaison par le prestataire de services logistiques (L) du sceau (S) livré au sceau transmis (S) au moyen d'un processus mis en oeuvre par ordinateur,
l) si la comparaison effectuée à l'étape k) est positive, transmission électronique par le prestataire de services logistiques (L) d'une confirmation de l'authenticité de l'envoi (P) au destinataire (E) au moyen d'une liaison Internet, et
n) si la comparaison effectuée à l'étape k) est positive, transmission électronique par le prestataire de services logistiques (L) à l'expéditeur (A) d'une confirmation de la livraison de l'envoi (P) au moyen d'une liaison Internet.

2. Procédé selon la revendication précédente, dans lequel la marque d'affranchissement (F) comporte également des informations d'affranchissement, et comprenant les étapes suivantes :
e') lecture par le prestataire de services logistiques (L) d'une information livrée concernant l'envoi et/ou l'affranchissement à partir de la marque d'affranchissement (F) de l'envoi (P) livré,
f') comparaison par le prestataire de services logistiques (L) de l'information livrée concernant l'envoi et/ou l'affranchissement à une information stockée concernant l'envoi et/ou l'affranchissement, et
g') si la comparaison effectuée à l'étape f') est positive, livraison de l'envoi (P) au destinataire (E).

3. Procédé selon la revendication précédente, comprenant l'étape suivante :
g") si la comparaison effectuée à l'étape f') est négative et si la comparaison effectuée à l'étape f) est positive, permettre une correction de l'information livrée concernant l'envoi et/ou l'affranchissement.

4. Procédé selon l'une des revendications précédentes, comprenant l'étape suivante :
k') si la comparaison effectuée à l'étape j) est positive, transmission électronique par le prestataire de services logistiques (L) d'une information concernant l'expéditeur de l'envoi (P) au destinataire (E) au moyen d'une liaison Internet.
